# EUROPEAN PATENT APPLICATION

(11) **EP 3 367 475 A1**
(43) Date of publication of application: **29.08.2018**
(21) Application number: 17158301.6
(22) Date of filing: 28.02.2017
(51) Int. Cl.: H01M 2/34, H01M 10/42, H01M 10/48, H01L 23/525

(54) **CONTROL AND/OR TRIGGER UNIT, BATTERY CELL, CELL MODULE, BATTERY, AND APPARATUS**

(71) Applicant: Robert Bosch GmbH, 70442 Stuttgart (DE); Lithium Energy and Power GmbH & Co. KG, 70469 Stuttgart (DE)
(72) Inventor: Konishi, Daisuke, 70191 Stuttgart (DE); Wille, Christopher, 70563 Stuttgart (DE); Hasenkopf, Dirk, 70190 Stuttgart (DE); Ashida, Yuji, 70191 Stuttgart (DE)

(57) **Abstract**

The present invention concerns a control and/or trigger unit (50) for an anti-fuse based fast discharge and/or shutdown unit (30) of a battery cell (10), comprising (i) a trigger probe (52) configured to apply in a trigger state to an anti-fuse element (32) of the underlying fast discharge and/or shut down unit (30) an electric current sufficient to initiate and/or perform the anti-fuse process for irreversibly establishing an electrically conducting connection previously insulated by the anti-fuse element (32) in its non-fused state and (ii) a current limiting element (55) configured to temporarily limit in the trigger state the electric current to be supplied to the trigger probe (52) for application to the anti-fuse element (32) to an extent sufficient to initiate and/or perform the empty-fuse process of the anti-fuse element (32).

## Description

### State of the Art

The present invention concerns a control and/or trigger unit, a battery cell, a cell module, a battery, and an apparatus. The present application in particular concerns a control and/or trigger unit for an anti-fuse based fast discharge and/or shut down unit of a battery cell.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

US 2013/0279058 A1 describes electric fuse apparatuses for power control circuits and configured for disconnecting electrical paths. WO 2001/083182 A1 and US 2013/0252039 A1 refer to the anti-fuse concept for establishing electrically connected paths.

In order to avoid a hazardous behavior as described above, battery cells have been equipped with fast discharge and/or shut down units, for instance together with certain separator configurations within the electrochemical part. The fast discharge and/or shutdown units may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

In view of the safety aspects, initiation of a fast discharge and/or shut down unit is majorly based on the process of short-circuiting battery cell terminals for starting the fast discharge and/or shutdown process. Accordingly, different means for realizing the short-circuiting process of battery cell terminals have been developed, in particular the so-called anti-fuse devices, which - in contrast to an ordinary fuse - in its normal condition offers an electric separation and upon activation or triggering offers an irreversible electric connection.

However, activating an anti-fuse device requires a comparable high electric current which has to be provided and controlled by a respective trigger element. Because of the comparable high electric current necessary for the triggering process, the trigger element in order to handle the accompanying thermal budget requires an increased design size which contradicts the integration of the whole fast discharge and/or shut down unit into a battery cell, cell module or battery of reduced size.

### Disclosure of the invention

The trigger and/or control unit according to the present invention as defined in independent claim 1, however, has the advantage of enabling the usage of a trigger element of reduced design size. This is achieved by providing a control and/or trigger unit for an anti-fuse based fast discharge and/or shutdown unit of a battery cell, comprising (i) a trigger probe configured to apply in a trigger state to an anti-fuse element of the underlying fast discharge and/or shut down unit an electric current sufficient to initiate and/or perform the anti-fuse process for irreversibly establishing an electrically conducting connection previously insulated by the anti-fuse element in its non-fused state and (ii) a current limiting element configured to temporarily allocate and/or temporarily limit in the trigger state the electric current to be supplied to the trigger probe for application to the anti-fuse element to an extent sufficient to initiate and/or perform the anti-fuse process of the anti-fuse element, in particular as an irreversible one-time process. By limiting the electric current to be supplied by the trigger probe to the anti-fuse elements only to the extent necessary for initiating and/or performing the empty-fuse process, the thermal budget is limited, too, thereby enabling a design for the trigger and/or control unit and its components with reduced size just efficient to manage the thermal budget for the limited time the current is supplied.

The dependent claims contain advantageous embodiments of the present invention.

The current limiting element may be realized in different forms. For instance the current limiting element may be realized as or may comprise an active element, for instance for sensing the electric current and/or the thermal budget at the site of the control and/or trigger unit, for evaluating the electric properties in an active manner and for deciding the time span the electric current for the trigger state should persist.

Evaluating the measured signals, for instance a current, a temperature, a voltage, and the target signal, for instance a current profile, the circuit, for instance in case of a hardware current control, or the software in the electronic control unit, for instance in case of a software current control, controls the power stage in a linear drive mode and represents the full closed looped system.

Alternatively and in a more simple manner these aspects may be - at least in the final outcome - realized by passive components, too.

Therefore and according to a preferred embodiment of the control and/or trigger unit the current limiting element may comprise or may be formed as a passive element, in particular having a positive temperature coefficient, thereby yielding an increasing electric resistance with increasing temperature or from a budget in general.

Additionally or alternatively, the current limiting element may be or may comprise a resistive element for limiting the current to be supplied to the trigger probe.

According to a particular simple embodiment of the control and/or trigger unit, said current limiting element may be or may comprise a PTC resistor.

The control and/or trigger unit can be adapted according to a large variety of operation conditions in a simple manner if the current limiting element is or comprises a polyswitch and in particular a polymeric resistor having a positive temperature coefficient and being based on a polymeric material.

The degrees of controllability and/or of reliability can be increased according to a further preferred embodiment of the control and/or trigger unit according to the present invention by having a current switching element which is configured in order to controllably switch in a trigger state an electric current to be supplied to the anti-fuse element to the trigger probe.

In addition, the current switching element may be formed as a field effect transistor and in particular as a field effect transistor of the n type and/or with a diode connected in parallel and in reverse direction with respect to the trigger probe.

Of course, the current switching element may be realized by other means in a simple and reliable manner, too.

The present invention further concerns a battery cell based on the invention's concept of having a current limiting element in connection with a trigger probe.

Consequently, the present invention suggests a battery cell which comprises
(a) first and second battery cell terminals for an external contact of the battery cell,
(b) an electrochemical part, preferably formed as or comprising a jelly roll or an electrode stack configuration, connected to the battery cell terminals,
(c) a fast discharge and/or shut down unit connected to the battery cell terminals in parallel to the electrochemical part, having an anti-fuse element and configured to discharge and/or to shut down the battery cell under first predetermined conditions by connecting the battery cell terminals by changing said anti-fuse element from a non-fused state electrically insulating said battery cell terminals to a fused state electrically connecting said battery cell terminals, in particular via a resistor, and
(d) a control and/or trigger unit or a connection to a control and/or trigger unit, wherein the control and/or trigger unit is formed according to the present invention and wherein the control and/or trigger unit is configured to controllably establish a contact between the first and second battery cell terminal by controllably triggering the trigger probe in electric contact with the anti-fuse element.

The electrochemical part of the inventive battery cell preferably comprises a positive electrode, a negative electrode, an electrolyte component having a conductive salt component and a solvent component, and a separator.

The degree of security of the inventive battery cell can be further increased if the separator is configured to become at least partially impermeable for ions generated inside of the electrochemical part upon reaching a predefined temperature.

The degree of reliability of the battery cell can be further increased
(A) if the fast discharge unit is configured to discharge the battery cell by means of a first current flowing through the battery cell and the fast discharge unit by connecting the first and second battery cell terminals via the resistor of the fast discharge unit and
(B) if the resistor is in particular selected to cause the first current during a current flow through the battery cell and the fast discharge unit to heat the electrochemical part such that the separator reaches the predefined temperature.

In order to even better avoid hazardous situations for the battery cell, the resistance of the fast discharge unit may be selected in order to avoid a thermal runaway of the battery cell during the heating of the electrochemical part by the first current flowing through the electrochemical part and the fast discharge unit.

The inventive battery cell may comprise two battery cell terminals which are contactable from outside of the battery cell and an electrochemical part which is preferably constructed in the form of at least one jelly roll/electrode stack comprising a plurality of electrodes, an electrolyte comprising at least one conductive salt and at least one solvent, and at least one separator.

The at least one separator may be constituted such that it becomes at least partially impermeable for ions which can be generated inside of the electrochemical part, when the at least one separator reaches a predefined temperature.

In order to increase the safety of the inventive battery cell, the battery cell includes a fast discharge unit having at least one resistor. The fast discharge unit is connectable between the two battery cell terminals and configured to discharge the battery by means of a first current flowing through the battery and the fast discharge unit.

More particularly, a first resistance value of the at least one resistor may be selected in such a way, that the first current causes during flowing through the battery and the fast discharge unit such a heating of the electrochemical part, that the at least one separator reaches the predefined temperature.

In other words, within a few milliseconds after activation of the fast discharge the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be discharged very fast in comparison to the slower deinsertion/insertion reaction of the electrodes, to the slow diffusion through the solid-electrolyte interface (SEI) and to the slow diffusion in the active material. This causes a strong separation of charge carries in front of the electrode which causes a further increasing of electrode polarization and a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

In addition, the present invention also refers to a cell module comprising a plurality of battery cells formed according to the present invention.

The present invention further concerns a battery comprising a plurality of battery cells and/or a plurality of cell modules, wherein one or a plurality of the battery cells and/or of the cell modules is or are formed according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery an individual fast discharge unit together with a respective control unit in particular with respective control parts and/or actuating and/or signaling parts.

Further on, the present invention also provides an apparatus and in particular a vehicle comprising an operation part and an energizing part for energizing the operation part for its operation. According to the present invention the energizing part is or comprises one or a plurality of battery cells, cell modules and/or batteries, each according to the present invention.

### Brief description of the drawings

In the following section embodiments of the present invention are disclosed with reference to the enclosed figures.
- Figure 1: is a schematic side view of an embodiment of the battery cell according to the present invention.
- Figures 2 and 3: are schematic side views of further embodiments of the battery cell according to the present invention focusing on details of its fast discharge and/or shut down unit and the control and/or triggering unit.
- Figure 4: shows a conventional setup for triggering a fast discharge and/or shut down device of the battery cell.
- Figure 5: is a graph elucidating the minimal electric currents necessary for igniting an anti-fuse element used for the present invention.
- Figures 6 to 9: schematically elucidate further embodiments of the present invention.

### Embodiments of the present invention

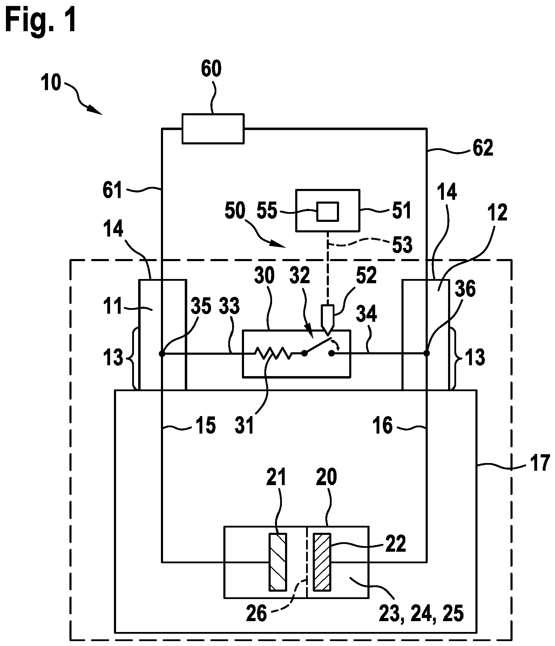

In the following, embodiments and the technical background of the present invention are described in detail by taking reference to accompanying figures 1 to 9. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 is a schematic block diagram representing a side view of an embodiment of the battery cell 10 according to the present invention.

The battery cell 10 shown in figure 1 comprises in a housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The battery cell 20 is connected via terminal lines 15 and 16 to first and second battery cell terminals 11, 12 which are configured for establishing an external contact, e.g. for supplying electric power via supply lines 61, 62 to a load 60 in order to run a particular device or apparatus providing the load 60.

Each of the first and second battery terminals 11, 12 comprises a connection side part 13 for establishing a connection to the battery cell 20 and its terminal lines 15, 16 on the one hand and a fast discharge unit 30 to be described below on the other hand.

In addition, the first and second battery terminals 11, 12 also comprise an external side part 14 for being contacted to respective supply lines 61, 62 connected to the load 60.

In addition to the terminal lines 15, 16 for connecting the battery cell 20, at connection nodes 35, 36 discharge lines 33 and 34 are provided in the connection side part 13. For connecting the connection side parts 13 of the first and second battery cell terminals 11, 12, the fast discharge unit 30 which is configured in order to perform a fast discharge of the battery cell 20 under certain conditions and in order to thereby avoid hazardous situations.

As shown schematically in figure 1, this may be done by operating a discharge switch 32 for closing the connection between the connection nodes 35 and 36 for discharging the battery cell 10 and its electrochemical part 20 via the serially enclosed resistor 31 having an appropriate resistance value.

On the one hand, the resistance value of the resistor 31 is chosen to achieve a discharge of the battery cell 20 as fast as possible but simultaneously to avoid a thermal run array of the battery cell 10 and its electrochemical part 20.

In order to further support the safety aspects implemented by the fast discharge and/or shut down unit 30, a control and/or trigger unit 50 is provided according to the present invention.

The control and/or trigger 50 is configured in order to conditionally initiate an electric conducting path between the respective battery cell terminal 11, 12, in the case of figure 1 of the first battery cell terminal 11.

The operations of the fast discharge and/or shut down unit 30 on the one hand and of the control and/or trigger unit 50 on the other hand may be initiated by first and second predetermined conditions which may also be equal and/or which may depend on each other.

In particular, the operation of the fast discharge and/or shut down unit 30 and of the control and/or trigger unit 50 may be designed such that the control and/or trigger unit 50 commences its operation not before the beginning of the operation of the fast discharge and/or shut down unit 30 and preferably with a particular delay after the fast discharge and/or shut down has started.

The control and/or trigger unit 50 as designed according to the present invention comprises a control part 51 and a trigger for 52 which are connected to each other via a connecting line which is also called trigger line 53. The trigger line 53 may be referred to as an external connection.

Via a trigger line 53, the control part 51 of the control unit 50 is capable of conditionally initiating operating the fast discharge and/or shut down unit 30, namely by conditionally operating the trigger probe 52.

Via connection with the trigger line 53, the control part 51 and in particular the entire control unit 50 may be separated and externally be mounted with respect to the battery cell 10 and/or the fast discharge and shut down 30.

The conditions for operating the fast discharge and/or shut down unit 30 may be settled based on the conditions and the operation state of the electrochemical part 20 of the battery cell 10.

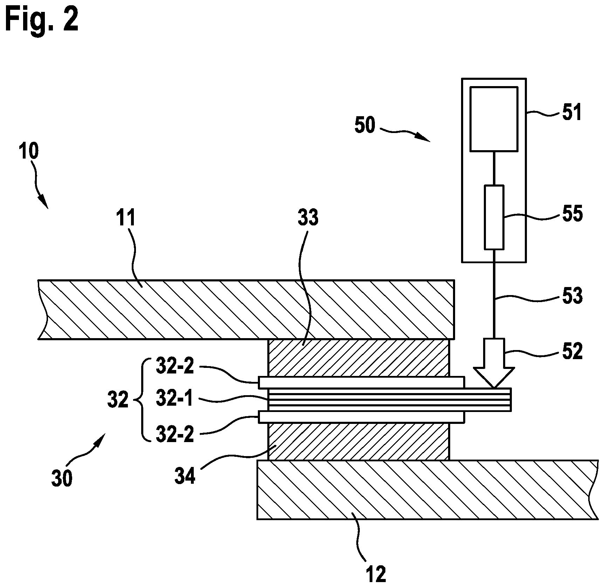

Figure 2 is a schematic side view of a further embodiment of the battery cell 10 according to the present invention focusing on details of its fast discharge and/or shut down unit 30 and the control and/or triggering unit 50 for controlling the same in particular for triggering the respective anti-fuse element 32 thereof.

The battery cell 10 in figure 2 is schematically represented by its first and second battery cell terminals 11 and 12, respectively.

The fast discharge and/or shut down unit 30 is formed by an anti-fuse element 32 which is a key component thereof. The anti-fuse element 32 may also be referred to a discharge switch or discharge switching unit in general. However, it has to be noticed that it is a key feature of an anti-fuse element 32 to establish irreversibly an electric connection, here between the first and second battery cell terminals 11 and 12, respectively.

In the embodiment of figure 2, the anti-fuse element 32 is formed by a layer or foil stack 32-1 sandwiched between contact elements formed by solder elements 32-2, for instance made from a solder paste.

As already elucidated above, in its normal and non-activated state, i.e. before triggering is applied, the anti-fuse element 32 offers an electric insulation between the first and second battery cell terminals 11, 12 and thus within the discharge lines 33, 34.

The activated state of the anti-fuse element 32 can be entered by applying a high electric current as a trigger signal by means of the trigger probe 52 in mechanical and electric contact with the stack 32-1. The electric current for triggering the stack 32-1 of the anti-fuse element 32 is supplied to the trigger probe 52 from the control part 51 of the control and/or trigger unit 50 by means of a trigger line 53 comprising - as a part within the control part 51 - a current limiting element 55 as a key component for the present invention.

The current limiting element 55 is configured in order to temporarily allocate and/or limit the electric current to the trigger probe 52 in order to be just sufficient for initiating and/or performing the anti-fuse process within the stack 32-1 of the anti-fuse element 32 of the fast discharge and/or shut down unit 30.

Thereby, it is possible to downsize the components of the control part 51 as it is not necessary to withstand high temperatures and high thermal budgets on a long-term run because of the temporal limitation of the current through the trigger probe 52.

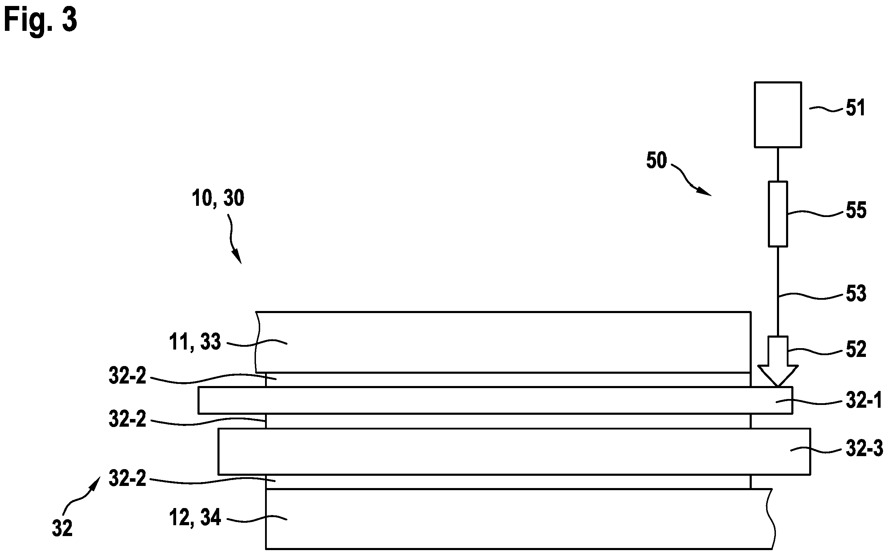

Figure 3 is a schematic side view of yet another embodiment of the battery cell 10 according to the present invention focusing on further details of the involved fast discharge and/or shut down unit 30 and the respective control and/or triggering unit 50 for triggering the used anti-fuse element 32 thereof.

In this embodiment, the control part 51 and the current limiting element 55 of the control and/or trigger unit 50 appear as separate elements.

In addition, the stack 32-1 of the anti-fuse element 32 - again located between the first and second battery cell terminals 11, 12 and thus within the discharge line 33, 34 - is embedded between solder elements 32-2 and followed on a downstream side by a separator 32-3.

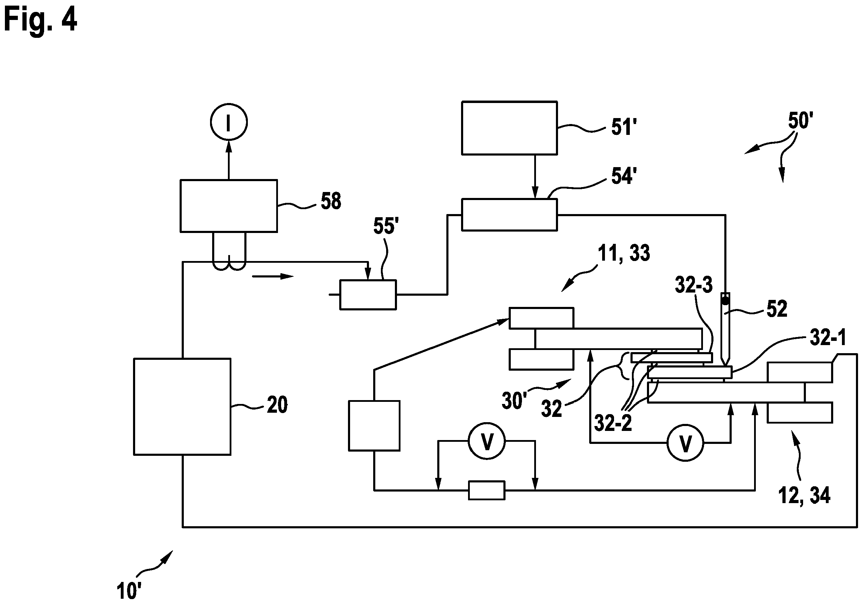

Figure 4 shows a conventional setup for triggering a fast discharge and/or shut down device 30 of a battery cell 10' which is therefore referred to as a conventional battery cell.

In this conventional battery cell 10' the trigger current for triggering the anti-fuse element 32 of the conventional fast discharge and/or shutdown device 30' is set by varying resistor 55' energized by the electrochemical part 20 of the conventional battery 10' under control of the conventional control and/or trigger unit 50' controlling the conventional trigger element 54'.

As - in contrast to the present invention - the conventional setup of figure 4 does not provide any means for limiting the trigger current supplied to the trigger probe 52 for applying the same to the layer or foil stack 32-1 of the anti-fuse element, its dimension has to be chosen in order to withstand high currents and increased thermal budgets on the long-term run.

However, the set up shown in figure 4 may be used in order to evaluate the ignition conditions or triggering conditions which have to be chosen in order to initiate and/or perform the anti-fuse process of the layout or foil stack 32-1 of the anti-fuse element 32.

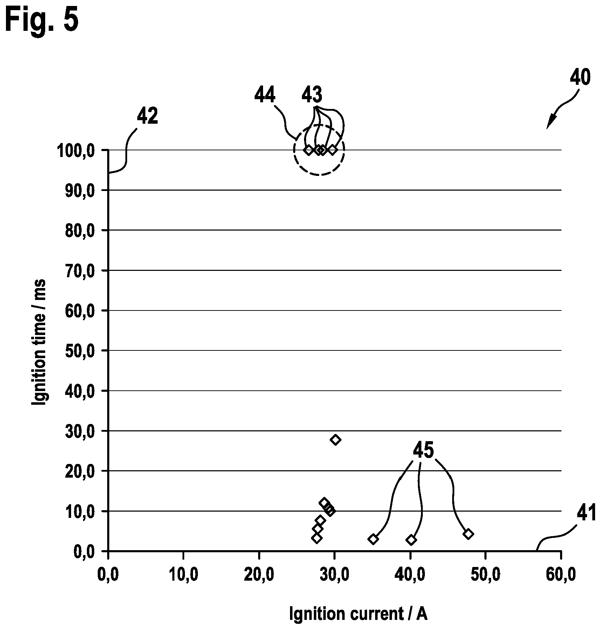

Therefore, figure 5 demonstrates by means of a graph 40 the minimal electric currents necessary for igniting an anti-fuse element 32 to be used for the present invention.

In figure 5 the abscissa 41 represents the trigger or ignition current and the ordinate 42 gives the time necessary for the ignition or triggering current to last in order to yield initiation and/or completion of the anti-fuse process desired in order to achieve an electrical conducting connection through the stack 32-1, the connecting elements in the form of solder elements 32-2, the separator 32-3, and finally the first and second battery cell terminals 11, 12 and the respective discharge lines 33, 34.

The measuring points 43 embraced by the circle 44 give evidence for conditions under which no ignition was observed. It can be seen that in the range of about 30 A there is a reasonable fraction of situations where no ignition and therefore no anti-fuse process can be initiated and/or performed at all. Therefore, it has to be expected that remarkably higher currents above 30 A have to be applied in order to reliably initiate and/or perform the anti-fuse process of the anti-fuse element and its foil or layer stack 32-1. This is indicated by the further measuring points 45 shown in the graph 40.

However, from these results it appears that the actual thermal impacts on the trigger element 54' on a long-term run is even higher than to be expected when using the minimal trigger current of about 30 A requiring a conventional large area of design for the conventional trigger element 54'.

The present invention offers measures in order to avoid these requirements for large area designs as already indicated above.

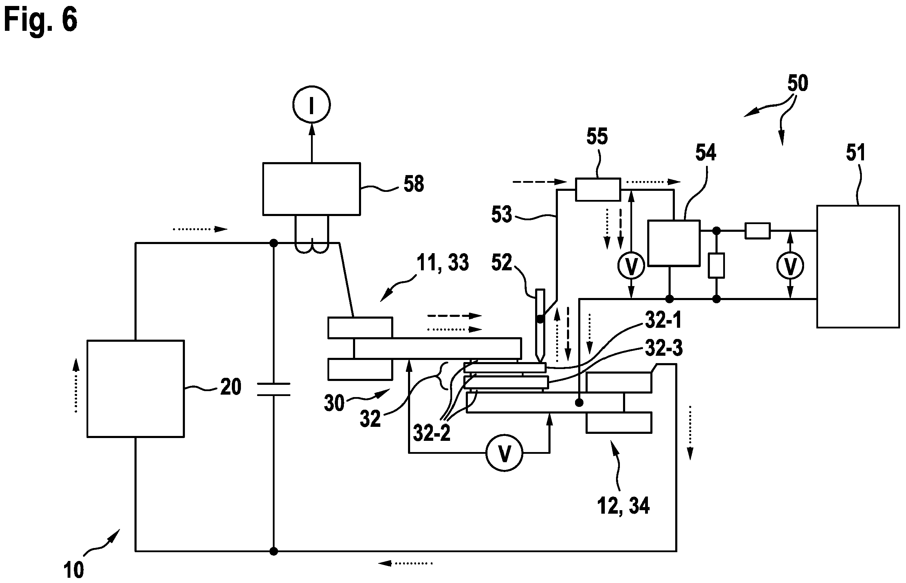

Figures 6 to 9 schematically elucidate in more detail further embodiments of the present invention and in particular measures which enable reduced area designs for a respective trigger elements 54.

The embodiment shown in figures 6 to 9 are highly comparable in view of the arrangements of the respective battery cells 10 and their first and second cell terminals 11, 12 and the discharge lines 33 and 34 for connecting to the fast discharge and/or shut down unit 30, as well as the control and/or trigger unit 50 with a trigger probe 52, the control part 51 and the trigger element 54.

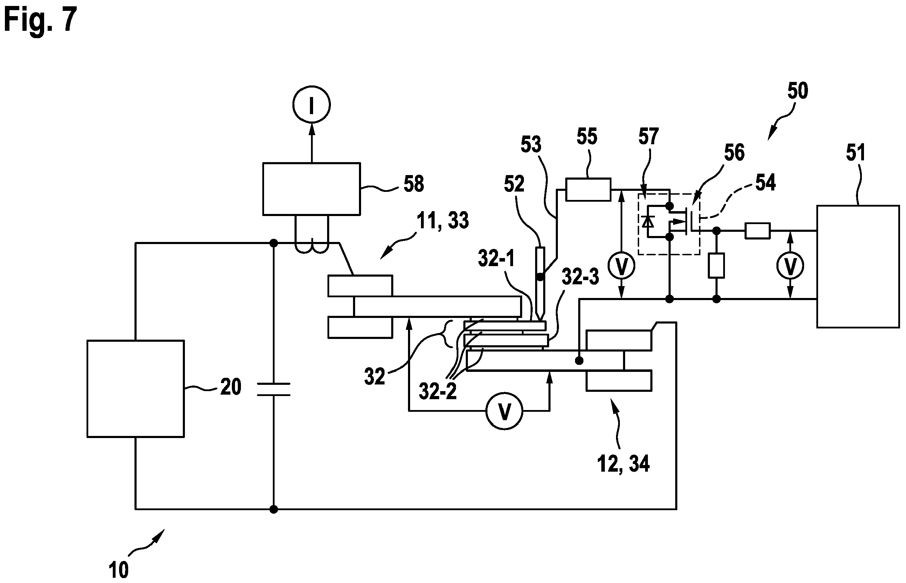

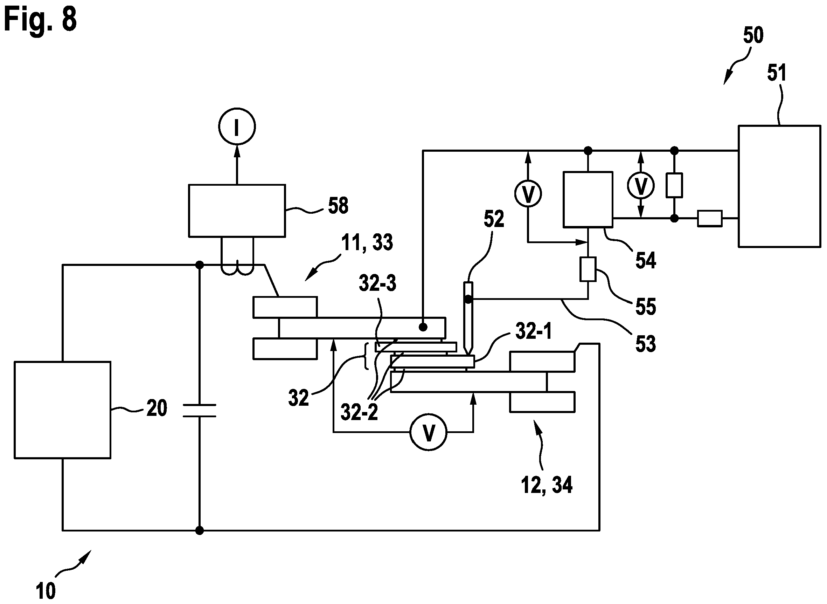

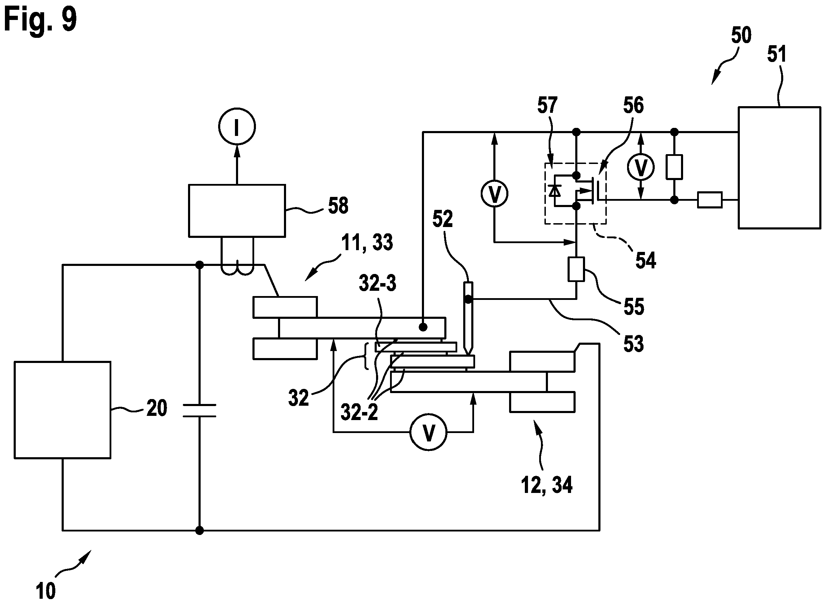

In the embodiments shown in figures 6 and 7 the stack 32-1 and a separator 32-3 are arranged in reverse order in view of the first and second cell terminals 11 and 12 when compared to the embodiments shown in figures 8 and 9.

In the embodiments shown in figures 6 and 8 general trigger elements 54 are presented, whereas in the embodiment shown in figures 7 and 9 the trigger element 54 has been exemplified by a field effect transistor 56 of the n type accompanied in parallel by a diode 57 in reverse direction when compared to the trigger probe 52.

The diode 57 may be formed explicitly or realized as a parasitic component of the field effect transistor of type n 56.

In each of the embodiments shown in figures 6 to 9, the current limiting element 55 is configured in order to temporarily allocate and/or limit the trigger current provided by the battery cell 10, partly controlled by the control part 51 and applied to the fast discharge and/or shut down unit and in particular to its anti-fuse element 32 and preferably to its layer or foil stack 32-1 by the trigger probe 52. Preferably, the current limiting element 55 is configured to yield a positive temperature coefficient behavior by increasing its electric resistance and thus reducing the trigger current with increasing temperature of the current limiting element 55.

These and further features, properties and advantages of the present invention will be further discussed in the following:
Inter alia, the present invention refers to an anti-fuse drive circuit with PTC element.

When using an arrangement or stack 32-1 of electrically conducting and isolating layers or foils, for instance a so-called nano foil arrangement, it appears that ignition for realizing an anti-fuse concept and thus an activation of the underlying anti-fuse can be achieved by 10 A at 5 V with a momentary point contact from an electrical probe also referred to as a trigger probe 52.

It can be confirmed that the trigger behavior of such a foil arrangement 32-1 by similar structure of an anti-fuse element 32 is complex as shown in figure 3.

From this and similar test arrangements, triggerable currents at 4,2 V are in the range of about 30 A or above. Higher current than 30 A is necessary for a reliable trigger process.

Therefore, when using a field effect transistor 56 and a resistance 55 for a trigger circuit 50, these components must withstand currents of about 30 A and above during trigger signal input.

As a result, an involved field effect transistor module 56 and the resistance 55 have to be formed with a comparable large size in order to manage the accompanying thermal budget.

The mentioned values of currents of about 30 A at for instance multitudes of about 4,2V are one example value for explanation. These values depend on the concrete anti-fuse design.

Figures 6 to 9 exemplify trigger circuit referred to as control and/or trigger units 50 in connection with an anti-fuse concept for realizing a fast discharge device (FDD) 30 or fast shutdown device (FSD) 30 for batteries, battery modules or even battery cells 10 with high energy densities.

In these circuits 50, the concept underlying the present invention is realized by having adopted a so-called PTC device 55 referred to as a device offering an electrical resistance which has a positive temperature coefficient.

In other words, the PTC device 55 yields an electric resistance which increases with increasing temperature.

With this temperature dependence resistance the trigger means 54, for instance a field effect transistor of type n 56 can be downsized. As the trigger means 54 is subjected to a high thermal budget only for the limited time, namely until the PTC device 55 increases its resistance, thereby decreasing the current and thus the further impact on the triggering means 54.

The PTC device 55 may be formed as a passive device configured to inherently increasing its electric resistance due to its temperature.

Alternatively the PTC device 55 may be formed as an active device having a control structure for sensing the thermal budget and in particular the temperature, making a decision regarding the thermal budget and the temperature and controlling an active manner the recent electric resistance of the PTC device 55 to be offered to the trigger circuit 50.

As a passive device, the operation principle of a so-called polyswitch may be adopted. Such a polyswitch used as a PTC device 55 can protect the general trigger means 54, e.g. the underlying field effect transistor 56, from an overcurrent condition by going from a low-resistance to a high-resistance state in response to its thermal budget or temperature.

As a result, the trigger current flowing through field effect transistor 56 is inherently formed as a short pulse wave form. Therefore, the triggering means 54 in particular the underlying field effect transistor 56 may be formed with a small size capable of managing high thermal budget on a small timescale offered by the PTC device 55.

From figures 6 to 9 the following aspects can be obtained:
(1) When the cell is in a critical condition - e.g. an internal short circuit condition - current flows through the cell. The path of the current is shown by the dotted arrows in figure 6.
(2) In order for the cell to go into a self fast discharge mode, the two terminals 11, 12 of the battery cell 10 must be connected.
(3) Nail penetration, as an example for a damaging process, also allows a second current path in addition to the current flow through the cell 10 indicated by the dashed arrows in figure 6.
(4) The nail penetration also completes the circuit before melting of the separator 26 within the layer and/or foil stack 32-1 of the anti-fuse element 32 of the underlying fast discharge and/or shut down unit 30.
   As described under items (3) and (4), the nail penetration is only one possibility. The nail penetration can in principle be realized by a wire establishing the electrical contact.
(5) Once the separator 26 is melted and is the heat generated due to the activation of the layer and/or foil stack 32-1, there will be the two current paths indicated by the dotted and dashed arrows in figures 6. However, to protect the field effect transistor of type n 56, the current limiting element 55, for instance a PTC resistor or polyswitch is used such that additional components in the circuit will not be subjected to safety relevant conditions, i.e. to high temperature and fire risk.

If a current limiting element 55 and in particular a PTC element is applied to the anti-fuse concept and in particular to its drive circuit referred to as a control and/or trigger unit 50 in the sense of the present invention, the PTC element 55 can protect a field effect transistor of type n 56 from overcurrent condition by going from a low-resistance to a high-resistance state in response.

As a result, one can realize small size printed circuit board by small size field effect transistor of type n.

The invention therefore inter alia concerns means to activate the layer and/or foil stack 32-1 or in general the anti-fuse element 32 opening up other current channels in addition to the current flow through the battery cell 10.

As the battery cell 10 gets heated up, shutting down of the separator 26 of the battery cell 10 - referred to as a shut down separator - as a result of increased heat generation is achieved.

The shutdown separator 26 stops the electrochemical activity of the battery cell 10 and in particular of its electrochemical part 20.

The means of activating the anti-fuse element and in particular its layout and/or foil stack 32-1 comprise - among other components - e.g. a field effect transistor of type n that allows higher current through the device (field effect transistor of type n) at least once.

## Claims

1. Control and/or trigger unit (50) for an anti-fuse based fast discharge and/or shutdown unit (30) of a battery cell (10), comprising:
- a trigger probe (52) configured to apply in a trigger state to an anti-fuse element (32) of the underlying fast discharge and/or shut down unit (30) an electric current sufficient to initiate and/or perform the anti-fuse process for irreversibly establishing an electrically conducting connection previously insulated by the anti-fuse element (32) in its non-fused state and
- a current limiting element (55) configured to temporarily allocate and/or temporarily limit in the trigger state the electric current to be supplied to the trigger probe (52) for application to the anti-fuse element (32) to an extent just sufficient to initiate and/or perform the empty-fuse process of the anti-fuse element (32).

2. Control and/or trigger unit (50) according to claim 1, wherein the current limiting element (55) is or comprises a passive element, in particular having a positive temperature coefficient.

3. Control and/or trigger unit (50) according to any one of the preceding claims, wherein the current limiting element (55) is or comprises a resistive element for limiting the current to be supplied to the trigger probe (52).

4. Control and/or trigger unit (50) according to any one of the preceding claims, wherein the current limiting element (55) is or comprises a PTC resistor.

5. Control and/or trigger unit (50) according to any one of the preceding claims, wherein the current limiting element (55) is or comprises a polyswitch and in particular a polymeric resistor having a positive temperature coefficient and based on an polymeric material.

6. Control and/or trigger unit (50) according to any one of the preceding claims, comprising a current switching element (55) configured to controllably switch in a trigger state an electric current to be supplied to the anti-fuse element (32) to the trigger probe (52).

7. Control and/or trigger unit (50) according to claim 6, wherein the current switching element (55) is formed as a field effect transistor and in particular as a field effect transistor of the n type and/or with a diode connected in parallel and in reverse direction with respect to the trigger probe (52).

8. Battery cell (10), comprising:
- first and second battery cell terminals (11, 12) for an external contact of the battery cell (10),
- an electrochemical part (20), preferably formed as or comprising a jelly roll or an electrode stack configuration, connected to the battery cell terminals (11, 12),
- a fast discharge and/or shut down unit (30) connected to the battery cell terminals (11, 12) in parallel to the electrochemical part (20), having an anti-fuse element (32) and configured to discharge and/or to shut down the battery cell (10) under first predetermined conditions by connecting the battery cell terminals (11, 12) by changing said anti-fuse element (32) from a non-fused state electrically insulating said battery cell terminals (11, 12) to a fused state electrically connecting said battery cell terminals (11, 12), in particular via a resistor (31), and
- a control and/or trigger unit (50) or a connection to a control and/or trigger unit (50),
wherein the control and/or trigger unit (50)
- is formed according to any one of the preceding claims and
- is configured to controllably establish a contact between the first and second battery cell terminal (11, 12) by controllably triggering the trigger probe (52) in electric contact with the anti-fuse element (32).

9. Battery cell (10) according to claim 8, wherein
- the electrochemical part (20) comprises a positive electrode (21), a negative electrode (22), an electrolyte component (23) having a conductive salt component (24) and a solvent component (25), and a separator (26),
- the separator (26) is configured to become at least partially impermeable for ions generated inside of the electrochemical part (20) upon reaching a predefined temperature,
- the fast discharge unit (30) is configured to discharge the battery cell (10) by means of a first current flowing through the battery cell (10) and the fast discharge unit (30) by connecting the first and second battery cell terminals (11, 12) via the resistor (31) of the fast discharge unit (30),
- the resistor (31) is in particular selected to cause the first current during a current flow through the battery cell (10) and the fast discharge unit (30) to heat the electrochemical part (20) such that the separator (26) reaches the predefined temperature, and/or
- the resistance (31) of the fast discharge unit (30) is selected in order to avoid a thermal runaway of the battery cell (10) during the heating of the electrochemical part by the first current flowing through electrochemical part (20) and the fast discharge unit (30).

10. Cell module, comprising a plurality of battery cells (10) according to claim 8 or 9.

11. Battery, comprising a plurality of cell modules according to claim 10 and/or a plurality of battery cells (10) according to claim 8 or 9.

12. Apparatus and in particular vehicle, comprising:
- an operation part and
- an energizing part for energizing the operation part,
wherein the energizing part is or comprises one or a plurality of battery cells (10) according to any one of claims 8 and 9, cell modules according to claim 10 and/or batteries according to claim 11.
